# EUROPEAN PATENT SPECIFICATION

(11) **EP 3 237 483 B1**
(45) Date of publication and mention of the grant of the patent: **11.11.2020**
(21) Application number: 15817824.4
(22) Date of filing: 20.12.2015
(51) Int. Cl.: C08G 59/24, C08G 59/40

(54) **RESIN COMPOSITION**
HARZZUSAMMENSETZUNG
COMPOSITION DE RÉSINE

(30) Priority: 23.12.2014 GB 201423157
(43) Date of publication of application: 01.11.2017
(73) Proprietor: Hexcel Composites Limited, Duxford Cambridgeshire CB22 4QB (GB)
(72) Inventor: SIMMONS, Martin, Duxford Cambs CB22 4QD (GB); THOMPSON, Scott, Duxford Cambs CB22 4QD (GB); MORTIMER, Steve, Duxford Cambs CB22 4QD (GB)
(74) Representative: TLIP Limited
(86) International application number: PCT/EP2015/080700
(87) International publication number: WO 2016/102411

(56) References cited:
- WO-A1-2013/130378

## Description

### FIELD OF THE INVENTION

The present invention relates to a resin composition (also referred to as a resin matrix composition or resin matrix) for producing a composite, a method for curing the resin composition, a composite obtained therefrom, use of the composite, use of the resin component of the resin composition, and a prepreg comprising the resin composition. The invention particularly but not exclusively relates to thermosetting resin (matrix) compositions for composite materials containing fibrous reinforcement material.

### BACKGROUND OF THE INVENTION

Composite materials produced by processes such as liquid moulding typically have a low level of toughness. Prior attempts to improve the toughness of the composite material have included adding tougheners to the liquid resin before it is injected in to the mould. The addition of high molecular mass thermoplastic toughening agents in the resin leads to an increase in viscosity. This increase in viscosity of the resin can make it difficult or even impossible to inject the resin into the mould as the resin begins to cure before the preform is completely filled with resin.

An alternative has been to disperse thermoplastic or rubber toughening agents in the form of undissolved particles in the resin composition. However, unless the particles are very small (sub-micron) the particles are effectively filtered by the fibrous reinforcement which results in uneven distribution of the particles and localised concentrations of tougheners. In some cases this filtering effect may lead to complete blocking of the mould from further injection or infusion of the resin.

The use of sub-micron scale toughening particles has been explored, with typical aerospace matrix resins where a high glass transition temperature (Tg) is typically required (>140°C wet). These types of particles have been found to be ineffective in these high glass transition matrices. The present invention therefore seeks to provide a resin composition which may be used to provide composite materials with improved toughness in comparison to prior attempts.

EP 2276808 discloses the use of a naphthalene di-epoxy resin in a composition to impart a glass transition temperature (Tg) of greater than 150 °C. More than 35 wt% of the epoxy components in the composition are naphthalene di-epoxy resins.

JP3631543 also discloses the use of a naphthalene di-epoxy resin in a composition to impart a high glass transition temperature (Tg), whereby 33 to 71 wt% of the epoxy components in the composition are naphthalene di-epoxy resins.

None of the aforesaid resins are however suitable for resin infusion moulding processes to produce composite parts which have the desired high wet Tg of at least 130°C in combination with excellent mechanical properties, including a high toughness, while also providing a suitably long processing window to enable the manufacture of large composite parts.

WO20140494028 discloses a resin composition for producing a composite part comprising a Bisphenol F or Bisphenol A glycidyl ether epoxy resin component and an amino-phenyl fluorene curative. US 4882330 discloses the use of a fluorene backbone epoxy resin.

WO2013/130378 discloses a curable epoxy resin composition comprising:
(a) at least one multifunctional epoxy resin having an epoxy functionality of greater than 1 and that functionality is based on glydicyl amine, or glycidyl ether, or both;
(b) a hardener composition comprising:
   i. at least one aliphatic or cycloaliphatic amine curing agent having one or more amino groups per molecule and capable of curing said at least one multifunctional epoxy resin at a temperature within the range of 30°C to 100°C;
   ii. at least one aromatic amine curing agent having one or more amino groups per molecule and capable of curing said at least one multifunctional epoxy resin at a temperature of 120°C or greater; wherein said epoxy resin composition has a cure onset temperature of 50°C as measured by Differential Scanning Calorimetry (DSC) at a rate of 5°C/minute and is curable at a temperature of 120°C or less for a time period of less than 10 minutes to achieve a degree of cure higher than that derived from the same composition with just (i) aliphatic or cycloaliphatic amine or (ii) aromatic amine in isolation.

The present invention aims to obviate or at least mitigate the above described problems and/or to provide improvements generally in properties such as thermo-oxidative stability, better ability for the resin matrix to be toughened, suitability for infusing processes, higher compression modulus, as well as better Tg and water resistance.

### SUMMARY OF THE INVENTION

According to the invention there is provided a composition, a method, a cured composition, a use and a prepreg as defined in any of the accompanying claims.

The present invention provides a resin composition for producing a composite, wherein the composition comprises:
(a) a first resin component comprising an acid catalyzed reaction product of phenol with cyclohexanone which is a bisphenol Z based epoxy resin or derivative thereof comprising at least one glycidyl group; and
(b) at least one curing agent;
wherein the curing agent comprises 9,9'-bis(3-chloro-4-aminophenyl)fluorene (CAF).

The present invention further provides a method of curing the resin composition of the present invention, wherein the method comprises the steps of:
(a) mixing the resin component and the curing agent; and
(b) heating the mixture for a time and at a temperature sufficient to cure the composition.

The present invention also provides a cured composite obtained by the method according to the present invention.

The present invention further provides the use of the cured composite of the present invention for forming aerospace components.

In an aspect of the invention the composition is suitable as an infusion resin for infusing fibrous reinforcement in a resin transfer moulding (RTM) process.

The present invention further provides a prepreg comprising fibrous reinforcement and a composition according to the present invention.

### DETAILED DESCRIPTION OF THE INVENTION

### First Resin Component

The term "resin" as used in the present application, refers to mixtures of chain lengths of resins having varying chain lengths comprising any of monomers, dimers, trimers, or polymeric resin having chain length greater than 3. References to specific resins throughout the description are to monomer components which would be used to form the resulting resin unless otherwise specified.

In accordance with the present invention the first resin component comprises glycidyl bisphenol Z epoxy resin. This is a bisphenol Z based epoxy resin or derivative thereof comprising at least one glycidyl group. The glycidyl resin may for example be formed by reacting the bisphenol Z precursor with epichlorohydrin in the presence of a basic catalyst.

The preferred resin component of the present invention comprises bisphenol Z diglycidyl ether according to the following structure:

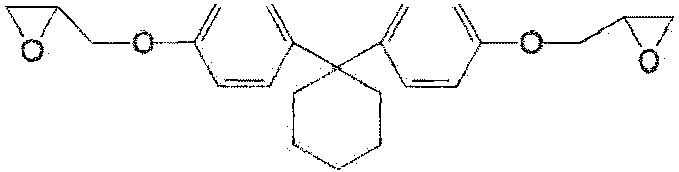

Other first resin components in accordance with the present invention may comprise the above structure with any one or more of the hydrogens attached to the carbons of the cyclohexyl group replaced by one or more substituents R₁ and/or R₂. R₁ and/or R₂ may be selected from n-alkyls, preferably methyl, ethyl, propyl, butyl or hexyl groups. R₁ and/or R₂ may also be selected from aromatic, aliphatic or halogen or phosphorus or sulphur substituents.

The substituents are not particularly limited and may comprise any organic group and/or one or more atoms from any of groups III A, IVA, VA, VIA or VIIA of the Periodic Table, such as a B, Si, N, P, O, or S atom or a halogen atom (e.g. F, Cl, Br or I).

When the substituent comprises an organic group, the organic group preferably comprises a hydrocarbon group. The hydrocarbon group may comprise a straight chain, a branched chain or a cyclic group. Independently, the hydrocarbon group may comprise an aliphatic or an aromatic group. Also independently, the hydrocarbon group may comprise a saturated or unsaturated group.

When the hydrocarbon comprises an unsaturated group, it may comprise one or more alkene functionalities and/or one or more alkyne functionalities. When the hydrocarbon comprises a straight or branched chain group, it may comprise one or more primary, secondary and/or tertiary alkyl groups. When the hydrocarbon comprises a cyclic group it may comprise an aromatic ring, an aliphatic ring, a heterocyclic group, and/or fused ring derivatives of these groups. The cyclic group may thus comprise a benzene, naphthalene, anthracene, indene, fluorene, pyridine, quinoline, thiophene, benzothiophene, furan, benzofuran, pyrrole, indole, imidazole, thiazole, and/or an oxazole group, as well as regioisomers of the above groups.

The number of carbon atoms in the hydrocarbon group is not especially limited, but preferably the hydrocarbon group comprises from 1-40 C atoms. The hydrocarbon group may thus be a lower hydrocarbon (1-6 C atoms) or a higher hydrocarbon (7 C atoms or more, e.g. 7-40 C atoms). The number of atoms in the ring of the cyclic group is not especially limited, but preferably the ring of the cyclic group comprises from 3-10 atoms, such as 3, 4, 5, 6 or 7 atoms.

The groups comprising heteroatoms described above, as well as any of the other groups defined above, may comprise one or more heteroatoms from any of groups IIIA, IVA, VA, VIA or VIIA of the Periodic Table, such as a B, Si, N, P, O, or S atom or a halogen atom (e.g. F, Cl, Br or I). Thus the substituent may comprise one or more of any of the common functional groups in organic chemistry, such as hydroxy groups, carboxylic acid groups, ester groups, ether groups, aldehyde groups, ketone groups, amine groups, amide groups, imine groups, thiol groups, thioether groups, sulphate groups, sulphonic acid groups, and phosphate groups etc. The substituent may also comprise derivatives of these groups, such as carboxylic acid anhydrydes and carboxylic acid halides.

In addition, any substituent may comprise a combination of two or more of the substituents and/or functional groups defined above.

The total content of the first resin component present in the resin composition can be any suitable amount but preferably is in the range based on the weight of the composition of from 5 wt% to 90 wt%, more preferably 80 wt% to 80 wt%, even more preferably from 10 wt% to 70 wt%, and even more preferably from 15wt% to 60 wt% and/or combinations of the aforesaid ranges.

### Curing Agent

The resin composition includes at least one curing agent, wherein the curing agent comprises 9,9'-bis(3-chloro-4-aminophenyl)fluorene (CAF). One or more curing agents can be used.

The amount of curing agent required to provide adequate curing of the resin composition will vary depending upon a number of factors including the type of resin being cured, the desired curing temperature and curing time. The particular amount of curing agent required for each particular situation may be determined by well-established routine experimentation. The curing agent may be used either alone, or in any combination with one or more other curing agents.

The total amount of curing agent may be present in the range of 1 wt% to 60 wt% of the resin composition. More preferably, the curing agent may be present in the range of 2 wt% to 50 wt%. Most preferably, the curing agent may be present in the range of 20 wt% to 30 wt%.

### Additional Resin Component

Additional resins other than glycidyl ethers of bisphenol Z resins may also be included in the matrix such as an epoxy resin, an bismaleimide resin, a, a phenolic resin, cyanate ester resins, benzoxazine resins or combinations thereof. Preferably the additional resin is an epoxy resin.

Suitable epoxy resins may include those based on glycidyl epoxy, and non-glycidyl epoxy resins, alone or in combination. It will be understood that glycidyl epoxies are those prepared via a condensation reaction of appropriate dihydroxy compounds, dibasic acid or a diamine and epichlorohydrin. Non-glycidyl epoxies are typically formed by peroxidation of olefinic double bonds.

The glycidyl epoxy resins may be further selected from glycidyl ether, glycidyl ester and glycidyl amine based resins. The non-glycidyl epoxy resins may be selected from either aliphatic or cycloaliphatic epoxy resins. Glycidyl ether epoxy resins are particularly preferred. Suitable examples include resins comprising at least one of bisphenol A (BPA) diglycidyl ether and/or bisphenol-F (BPF) diglycidyl ether and derivatives thereof; tetraglycidyl derivatives of 4,4'-diaminodiphenylmethane (TGDDM); triglycidyl derivatives of aminophenols (TGAP), epoxy novolacs and derivatives thereof, other glycidyl ethers and glycidyl amines well known in the art, or any combination thereof.

Epoxy resins having two epoxy groups on the monomer unit from which the resin is derived are particularly preferred, and are typically termed di-functional epoxy resins. It will be understood that this would include any suitable epoxy resins having two epoxy functional groups. Di-functional epoxy resins, by way of example, include those based on; diglycidyl ether of bisphenol F, bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, or any combination thereof.

The difunctional epoxy resin may be preferably selected from resins based on diglycidyl ether of bisphenol F, diglycidyl ether of bisphenol A, alone or in combination.

Most preferred epoxy resins are diglycidyl ethers of bisphenol F, such as those available commercially from Huntsman Advanced Materials under the trade names Araldite LY3581 and GY285. Preferred bisphenol A epoxy resins include LY1556 such as supplied by Huntsman. The epoxy resin may be used alone or in any suitable combination with non-epoxy resins in the form of a resin composition blend. Alternatively, the epoxy resin may be copolymerised with any suitable non-epoxy resin.

Preferably the ratio of the first resin component to the additional resin component is from 8:1 to 2:1, more preferably from 4:1 to 3:1, including 7:2, for achieving the best neat toughness properties, most preferably when the additional resin component is a bisphenol F resin.
The resin composition may additionally comprise at least one further thermoset resin. The further thermoset resins may be preferably selected from cyanate ester resins, benzoxazine resins, bismaleimide resins, , phenolic resins, , or any combination thereof.

The further thermoset resins may be present in any suitable amount.

### Additional Components

The resin composition of the present invention may also include at least one additional ingredient such as performance enhancing or modifying agents. The performance enhancing or modifying agents, by way of example, may be selected from flexibilisers, toughening agents/particles, accelerators, core shell rubbers, flame retardants, wetting agents, pigments/dyes, flame retardants, plasticisers, UV absorbers, viscosity modifiers, stabilisers, inhibitors, or any combination thereof. Toughening particles/agents may include, by way of example, any of the following, either alone or in combination: polyamides, copolyamides, polyimides, aramids, polyketones, polyetheretherketones, polyarylene ethers, polyesters, polyurethanes, polysulphones, polyethersulphones, high performance hydrocarbon polymers, liquid crystal polymers, PTFE, elastomers, segmented elastomers such as reactive liquid rubbers based on homo or copolymers of acrylonitrile, butadiene, styrene, cyclopentadiene, acrylate, or polyurethane rubbers.

Toughening particles/agents may be selected from polyether sulphone (PES) or core shell rubber particles. Most preferred are core-shell rubber particles (CSP). Examples are Paraloid particles from Dow Chemical Company or Kane-Ace particles from Kaneka, which are predispersed in a range of epoxy resins. Specific examples include MX136 (dispersed in bisphenol F epoxy resin) and MX 411 (dispersed in MY721).

Toughening particles/agents, if present, may be present in the range 0.1 wt% to 35 wt% of the resin composition. More preferably, the toughening particles/resin may be present in the range 2 wt% to 25 wt%. Further preferably, the toughening particles/resin may be present in the range from 2 to 20 wt%, preferably from 2.5 wt% to 7.5 wt% and most preferably 3 to 6 wt%, including 5.0 wt% for achieving the best neat toughness properties.
Suitable toughening particles/agents include, by way of example, Sumikaexcel 5003P, which is commercially available from Sumitomo Chemicals. Alternatives to 5003P are Virantage VW10200 RP and VW10700 RP from Solvay. The toughening particles/agents may be in the form of particles having a diameter less than or equal to 5 microns, more preferably less than or equal to 1 micron in diameter. The size of the toughening particles/agents may be selected such that they are not filtered by the fibre reinforcement.

Optionally the composition may also comprise an oil adsorbent such as fillers. These can be added to promote adhesion, improve corrosion resistance, control the rheological properties, and/or reduce shrinkage during curing. Fillers may include silica-gels, calcium- silicates, phosphates, molybdates, fumed silica, amorphous silica, amorphous fused silica, clays such as bentonite, organo-clays, aluminium-trihydrates, hollow-glass-microspheres, hollow-polymeric microspheres, and calcium carbonate. The preferred oil adsorbent is CaCO₃. The composition may also contain filler particles to allow glue line thickness control. These particles may be glass beads, silica oxide or micro-balloons. The size of the particles may range from 50 microns to 500 microns, preferably from 100 to 200 microns. The oil adsorbent is preferably present in the composition in an amount of 5 to 20 wt%, more preferably 8 to 12 wt% by total weight of the composition.

The composition may also comprise one or more corrosion inhibitors. Typically, the inhibitor is substantially free of Cr to conform to potential future environmental restrictions. A preferred corrosion inhibitor is strontium aluminium polyphosphate hydrate. The corrosion inhibitor is preferably present in the composition in an amount of 5 to 20 wt%, more preferably 8 to 12 wt% by total weight of the composition.

A urone accelerator may also be present in the composition. The use of a urea based accelerator as the urone accelerator is preferred. Preferred urea based materials are the range of materials available under the commercial name DYHARD(R) the trademark of Alzchem, and urea derivatives such as the ones commercially available as UR200, UR300, UR400, UR600 and UR700. Most preferred as urone accelerators include 4,4-methylene diphenylene bis(N,N-dimethyl urea) (available from Omnicure as U52 M). The urone accelerator is preferably present in the composition in an amount of 1 to 20 wt% and most preferred in an amount of 2 to 12 wt% by total weight of the composition.

The composition may also contain conductive particles so that the final component has an electrical pathway. Examples of conductive particles include those described in WO20l1/027l60, WO2011/114140 and WO2010/150022.

### Curing Method

The process according to the present invention comprises the steps of (1) mixing the resin component or components and the curing agent or agents to form a substantially uniform mixture and (2) heating the mixture for a time and at a temperature sufficient to cure the composition. While the curing reaction may take place slowly at room temperature, it may be brought about by heating the mixture at 120° C to about 250° C, preferably 170°C to 190°C, for a period of time from about one to about 18 hours or more, preferably 1 to 3 hours. The cure can be brought about by a consistent temperature during this time period or varying temperatures in the time period within the temperature range or even by heating the mixture in cycles.

When cured between 170 and 190°C, preferably at 180°C, for one to three hours, preferably two hours, the resin composition of the present invention can have one or more of the following properties:
i) compression modulus in the range of 3.0 to 3.8 GPa, preferably 3.3 to 3.5 GPa as measured in accordance with ASTM D790;
ii) wet Tg in the range of 130 to 190°C, preferably 145 to 185°C, more preferably 174 to 185°C as measured in accordance with ASTM D7028;
iii) dry Tg in the range of 150 to 200°C, preferably 180 to 195°C, more preferably 184 to 195°C as measured in accordance with ASTM D7028;
iv) critical strain energy release rate G_{1C} in the range of 150 to 1000 Jm⁻², preferably 450 to 1000 Jm⁻², more preferably 700 to 1000 Jm⁻² as measured in accordance with ASTM D5045;
v) critical stress intensity factor K_{1C} in the range of 0.75 to 2.00 MPa.m^{0.5}, preferably 1.31 to 2.00 MPa.m^{0.5}, more preferably 1.60 to 1.80 MPa.m^{0.5} as measured in accordance with ASTM D5045.

The improved composite materials of the present invention find application in forming aerospace components such as numerous primary and secondary aerospace structures (wings, fuselage, bulkhead etc.), but will also be useful in many other high performance composite applications including automotive, rail and marine applications where high compressive strength, and resistance to impact damage are needed.

### Prepreg

The present invention also provides a prepreg comprising fibrous reinforcement and the resin composition. Prepreg is the term used to describe fibres impregnated with a resin in the uncured or partially cured state and ready for curing. The structural fibres employed in the prepregs of this invention may be of any suitable material, glass fibre, carbon fibre, natural fibres (such as basalt, hemp, seagrass, hay, flax, straw, coconut) and Aramid™ being particularly preferred. They may be tows or fabrics and may be in the form of random, knitted, non-woven, multi-axial or any other suitable pattern.

For structural applications, it is generally preferred that the fibres be unidirectional in orientation. When unidirectional fibre layers are used, the orientation of the fibre can vary throughout the prepreg stack. However, this is only one of many possible orientations for stacks of unidirectional fibre layers. For example, unidirectional fibres in neighbouring layers may be arranged orthogonal to each other in a so-called 0/90 arrangement, which signifies the angles between neighbouring fibre layers. Other arrangements, such as 0/+45/-45/90 are of course possible, among many other arrangements.

The structural fibres may comprise cracked (i.e. stretch-broken), selectively discontinuous, or continuous fibres. The structural fibres may be made from a wide variety of materials, such as carbon, graphite, glass, metalized polymers, aramid and mixtures thereof. The structural fibres may be individual tows made up of a multiplicity of individual fibres and they may be woven or non-woven fabrics. The fibres may be unidirectional, bidirectional or multidirectional according to the properties required in the final laminate. Typically the fibres will have a circular or almost circular cross-section with a diameter, preferably in the range from 5 to 19 pm. Different fibres may be used in different prepregs used to produce a cured laminate. Exemplary layers of unidirectional structural fibres are made from HexTow® carbon fibres, which are available from Hexcel Corporation. Suitable HexTow® carbon fibres for use in making unidirectional fibre layers include: IMA carbon fibres, which are available as fibres that contain 6,000 or 12,000 filaments and weight 0.223 g/m and 0.446 g/m respectively; IM8 or IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m.

The structural fibres of the prepregs will be substantially impregnated with the epoxy resin and prepregs with a resin content of from 20 to 85 wt % of the total prepreg weight are preferred more preferably with 30 to 50 wt % resin based on the weight of the prepreg.

The prepregs of this invention can be produced by impregnating the fibrous material with the resin. In order to increase the rate of impregnation, the process is preferably carried out at an elevated temperature so that the viscosity of the resin is reduced. However it must not be so hot for sufficient length of time that premature curing of the resin occurs. Thus, the impregnation process is preferably carried out at temperatures in the range of from 20°C to 90°C. The resin may be applied to the fibrous material at a temperature in this range and consolidated into the fibrous material by pressure such as that exerted by passage through one or more pairs of nip rollers.

The prepreg of the present invention may be prepared by feeding the components to a continuous mixer where a homogenous mixture is formed. The mixing is typically performed at a temperature in the range 35 to 80°C. The mixture may then be cooled and pelletized or flaked for storage. Alternatively the mixture may be fed directly from the continuous mixer onto a prepreg line where it is deposited onto a moving fibrous layer and consolidated into the fibrous layer, usually by passage through nip rollers. The prepreg may then be rolled and stored, or transported to the location at which it is to be used. An additional benefit of the prepregs based on the composition of the present invention is that as the composition is not tacky to the touch at ambient temperature a backing sheet for the prepreg may not be required.

### Liquid Moulding

Preferably the resin composition is suitable as a resin transfer moulding (RTM) resin composition. The resin composition may be heated to a temperature ranging from 20 to 150 °C, preferably from 50 to 140 °C, more preferably from 80 to 145 °C, and most preferably from 90 to 130 °C and/or combinations of the aforesaid ranges prior to infusing a lay-up to reduce the viscosity of the resin composition.
It is to be understood that the term "liquid moulding process" relates to methods of obtaining cured composite materials using a mould. Such liquid moulding processes preferably refer to Liquid Composite Moulding in which the resin is injected in to the mould comprising the fibre preform, or to Resin Infusion Processes where the resin is infused and allowed to seep in to the fibre preform. Injection of a resin composition may be under pressure into a dry preform; whilst infusion refers to infusion with liquid resin rather than resin film.

In particular, suitable liquid moulding processes to which the present invention may apply include resin transfer moulding (RTM), vacuum assisted resin transfer moulding (VARTM), Seeman composite resin infusion moulding process (SCRIMP), resin infusion under flexible tooling (RIFT), or liquid resin infusion (LRI). The resin composition of the present invention is particularly suitable for RTM and LRI processes.

The liquid moulding process used for processing the resin composition includes the steps of placing a fibrous reinforcement in the mould, and injecting the resin composition in to the mould. The contents of the mould would then be cured, and the cured composite material removed.

The liquid moulding process may use a two-sided mould set that forms both surfaces of the composite material. The lower side of the mould may be a rigid mould. The upper side may be a rigid or flexible mould. Suitable flexible moulds include, by way of example, those made from composite materials, silicone, or extruded polymer films such as nylon. The two sides of the mould may fit together to produce a mould cavity, with the fibrous reinforcement placed in the mould. The mould may then be closed prior to the introduction of the resin composition.

The resin composition may be introduced in to the mould using any suitable method. Suitable methods include, by way of example, vacuum infusion, resin infusion, and vacuum assisted resin transfer. The introduction of the resin may be performed at elevated temperature. The mould may be sealed after the resin composition has been completely introduced. The mould may then be subject to conditions as required in order to effect curing of the resin composition therein.

The curing step of the liquid moulding process may result in a resin composition of the present invention being fully or partially cured in the mould using any suitable temperature, pressure, and time conditions.

Infusion processes comprise a mould having a solid base (e.g. one made of metal) into which a dry fibrous preform is placed. The resin composition in the form of a liquid is placed on the top of the dry preform. The mould has a top face which is a flexible bag, and which allows flow of the resin in to the dry preform under pressure and therefore infusion in to the fibre.

The present invention will now be illustrated, but in no way limited, by reference to the following examples.

### EXAMPLES

Resins and curing agents were blended at 80 to 90 °C. The material was then cured in a mould at a temperature of 180 °C for 2 hours.

Compression modulus was determined using ASTM D790 and an Instron mechanical test machine on neat resin tubes that were machined to parallel ends.

Enthalpy was measured using TA Q100 DSC running from 25 °C to 350 °C at a ramp rate of 10 °C/min.

Water uptake was determined by immersing pre-weighed neat resin samples (40 mm x 8 mm x 3 mm) in water at a temperature of 70 °C. Samples were removed after two weeks. Excess water was removed with paper towel and the sample weighed which then determined how much water had been picked up.

Tg was measured according to ASTM 7028 using TA Q800 DMA running from 25 °C to 275 °C at a ramp rate of 5 °C/min, using a frequency of 1 Hz and an amplitude of 30 microns. The fixture used was a single cantilever using a multi frequency strain method.

Neat resin toughness was determined according to ASTM D5045.

### Comparative Examples 1 to 3

Comparative example 1 was bisphenol A epoxy resin (LY1556 as supplied by Huntsman) cured with 4,4'-DDS. Comparative example 2 was bisphenol F epoxy resin (LY3581 as supplied by Huntsman) cured with 4,4'-DDS. Comparative Example 3 was bisphenol Z diglycidyl ether (Bis-Z) cured with 4,4'-DDS. The resin (20.0 g) and 4,4' DDS (6.1 g) were placed into a 100 ml speedmixing pot. The mixture was warmed in an air circulating oven at 60 °C and then placed in a speedmixer from Hauschild for blending. The mix conditions were 2,500 rpm for 30 seconds. The contents were then poured into moulds pre-coated with release agent and placed in a programmable fan oven for cure. Cure cycle was 180 °C for 2 hours using a ramp rate of 2 °C per minute from ambient.

The results are shown in Table 1 below. Compression performance is slightly higher for bisphenol Z resin than bisphenol A or bisphenol F resins when cured with 4,4'-DDS.

**Table 1 - compression modulus properties of epoxy resins cured with 4,4'-DDS**

| **Comparative Example** | **Epoxy Resin** | **Curing Agent** | **Compression Modulus (GPa)** |
|---|---|---|---|
| 1 | LY1556 | 4,4'-DDS | 3.05 |
| 2 | LY3581 | 4,4'-DDS | 3.40 |
| 3 | Bis-Z | 4,4'-DDS | 3.40 |

### Comparative Examples 4 to 6

Comparative Examples 4 to 6 were bisphenol Z diglycidyl ether (Bis-Z) cured with different aromatic curatives. Bis-Z (20.0 g) and the curing agent were placed into a 100 ml speedmixing pot. The mixture was warmed in an air circulating oven at 60 °C and then placed in a speedmixer from Hauschild for blending. The mix conditions were 2,500 rpm for 30 seconds. The contents were then poured into moulds pre-coated with release agent and placed in a programmable fan oven for cure. Cure cycle was 180 °C for 2 hours using a ramp rate of 2 °C per minute from ambient. The curing agent in comparative example 4 was 4,4'-DDS (6.1 g). The curing agent in comparative example 5 was 3,3'-DDS (6.1 g). The curing agent in comparative example 6 was M-DEA (7.6 g).

### Comparative Examples 7 to 12

Comparative examples 7 to 12 were bisphenol A epoxy resin (LY1556) and bisphenol F epoxy resin (LY3581) epoxy resins cured with aromatic curatives.

For comparative example 7, LY3581 (20.0 g) and 3,3'-DDS (7.5 g) were placed into a 100 ml speedmixing pot. The mixture was warmed in an air circulating oven at 60 °C and then placed in a speedmixer from Hauschild for mixing. The mix conditions were 2,500 rpm for 30 seconds. The contents were then poured into moulds pre-coated with release agent and placed in a programmable fan oven for cure. Cure cycle was 180 °C for 2 hours using a ramp rate of 2 °C per minute from ambient.

For comparative example 8 the same experimental procedure was used as in comparative example 7 but with 4,4'-DDS (6.1 g) as the curing agent.

For comparative example 9, LY3581 (20.0 g) and M-DEA (9.4 g) were placed into a 100 ml speedmixing pot. The mixture was warmed in an air circulating oven at 110 °C over 30 minutes or until the amine had dissolved in the epoxy resin. The contents were then poured into moulds pre-coated with release agent and placed in a programmable fan oven for cure. Cure cycle was 180 °C for 2 hours using a ramp rate of 2 °C per minute from ambient.

For comparative example 10, LY1556 (20.0 g) and 3,3'-DDS (6.5 g) were placed into a 100 ml speedmixing pot. The mixture was warmed in an air circulating oven at 60 °C and then placed in a speedmixer from Hauschild for mixing. The mix conditions were 2,500 rpm for 30 seconds. The contents were then poured into moulds pre-coated with release agent and placed in a programmable fan oven for cure. Cure cycle was 180 °C for 2 hours using a ramp rate of 2 °C per minute from ambient.

For comparative example 11, the same experimental procedure was used as in comparative example 10 but with 4,4'-DDS (6.5 g) as the curing agent.

For comparative example 12, LY1556 (20.0 g) and M-DEA (8.2 g) were placed into a 100 ml speedmixing pot. The mixture was warmed in an air circulating oven at 110 °C over 30 minutes or until the amine had dissolved in the epoxy resin. The contents were then poured into moulds pre-coated with release agent and placed in a programmable fan oven for cure. Cure cycle was 180 °C for 2 hours using a ramp rate of 2 °C per minute from ambient.

The results for comparative examples 4 to 12 are shown in Table 2 below.

When cured with 4,4'-DDS (comparative examples 4, 8 and 11), bisphenol Z resin demonstrated the higher enthalpy, lower water uptake and the higher Tg compared to bisphenol A and F epoxy resins. When cured with 3,3'-DDS (comparative example 5, 7 and 10), bisphenol Z resin demonstrated higher enthalpy, lower water uptake and the higher Tg compared to bisphenol A and F resins. When cured with M-DEA (comparative example 6, 9 and 12), bisphenol Z resin demonstrated higher enthalpy and Tg compared to bisphenol A and F resins, as well as low water uptake.

**Table 2 - properties of epoxy resins cured with aromatic curing agents**

| **Comparative Ex.** | **Epoxy Resin** | **Curing Agent** | **Onset (°C)** | **Enthalpy (J/g)** | **Water uptake (%)** | **Dry Tg (°C)** | **Wet Tg (°C)** |
|---|---|---|---|---|---|---|---|
| 4 | Bis-Z | 4,4'-DDS | 174 | 410 | 2.1 | 193 | 155 |
| 5 | Bis-Z | 3,3'-DDS | 162 | 414 | 2.1 | 183 | 149 |
| 6 | Bis-Z | M-DEA | 182 | 377 | 1.5 | 155 | 146 |
| 7 | LY3581 | 3,3'-DDS | 163 | 444 | - | 144 | - |
| 8 | LY3581 | 4,4'-DDS | 170 | 330 | - | 165-170 | - |
| 9 | LY3581 | M-DEA | 166 | 350 | - | 130 | - |
| 10 | LY1556 | 3,3'-DDS | 167 | 415 | 2.6 | 150 | 115 |
| 11 | LY1556 | 4,4'-DDS | 165 | 350 | 2.7 | 190 | 150 |
| 12 | LY1556 | M-DEA | 166 | 359 | 1.5 | 142 | 127 |

### Comparative Examples 13 to 18

Comparative Example 13 was bisphenol Z diglycidyl ether (Bis-Z) cured with 4,4'-DDS. Comparative Examples 14 to 16 also included bisphenol F resin (LY3581 as supplied by Huntsman) with core shell particles (CSP) pre-dispersed in bisphenol F resin at a 25 weight % loading from Kaneka Corporation Japan (MX136). Comparative examples 17 and 18 were bisphenol F resin (LY3581, MX136) cured with 4,4'-DDS.

For comparative example 13, Bis-Z (20.0 g) and 4,4'-DDS (6.1 g) were placed into a 100 ml speedmixing pot. The mixture was warmed in an air circulating oven at 60 °C and then placed in a speedmixer from Hauschild for mixing. The mix conditions were 2,500 rpm for 30 seconds. The contents were then poured into moulds pre-coated with release agent and placed in a programmable fan oven for cure. Cure cycle was 180 °C for 2 hours using a ramp rate of 2 °C per minute from ambient.

For comparative example 14, Bis-Z (20.0 g), LY3581 (up to a 8:1 ratio ofBis-Z:LY3581), MX136 (2.7 g) and 4,4'- DDS (6.2 g) were placed into a 100 ml speedmixing pot. The same procedure was used to mix and cure the formulation as in comparative example 13.

For comparative example 15, Bis-Z (20.0 g), LY3581 (up to a 7:2 ratio ofBis-Z:LY3581), MX136 (5.6 g) and 4,4'- DDS (6.3 g) were placed into a 100 ml speedmixing pot. The same procedure was used to mix and cure the formulation as in comparative example 13.

For comparative example 16, Bis-Z (20.0 g), LY3581 (up to a 2:1 ratio ofBis-Z:LY3581), MX136 (8.4 g) and 4,4'- DDS (6.5 g) were placed into a 100 ml speedmixing pot. The same procedure was used to mix and cure the formulation as in comparative example 13.

For comparative example 17, LY3581 (15.7 g), MX136 (5.8 g) and 4,4'-DDS (7.5 g) were placed into a 100 ml speedmixing pot. The mixture was warmed in an air circulating oven at 60 °C and then placed in a speedmixer from Hauschild for mixing. The mix conditions were 2,500 rpm for 30 seconds. The contents were then poured into moulds pre-coated with release agent and placed in a programmable fan oven for cure. Cure cycle was 180 °C for 2 hours using a ramp rate of 2 °C per minute from ambient.

For comparative example 18, LY3581 (10.8 g), MX136 (12.2 g) and 4,4'-DDS (7.5 g) were placed into a 100 ml speedmixing pot. The mixture was warmed in an air circulating oven at 60 °C and then placed in a speedmixer from Hauschild for mixing. The mix conditions were 2,500 rpm for 30 seconds. The contents were then poured into moulds pre-coated with release agent and placed in a programmable fan oven for cure. Cure cycle was 180 °C for 2 hours using a ramp rate of 2 °C per minute from ambient.

The results are shown in Table 3 below.

Higher values of Tg were observed for all bisphenol Z resins cured with 4,4'-DDS (comparative examples 13 to 16). The highest neat toughness measurements were seen for the 7:2 ratio of bisphenol Z resin:bisphenol F resin (comparative example 15).

**Table 3 - toughening properties of epoxy resin formulations**

| **Comparative Ex.** | **Bis-Z: LY3581** | **Curing Agent** | **CSP (%)** | **Tg (°C)** | **G_{1C} (Jm⁻²)** | **K_{1C} (MPa.m^{0.5})** |
|---|---|---|---|---|---|---|
| 13 | 1:0 | 4,4'-DDS | - | 191 | 170 | 0.79 |
| 14 | 8:1 | 4,4'-DDS | 2.5 | 184 | 494 | 1.31 |
| 15 | 7:2 | 4,4'-DDS | 5.0 | 182 | 981 | 1.73 |
| 16 | 2:1 | 4,4'-DDS | 7.5 | 177 | 728 | 1.64 |
| 17 | 0:1 | 4,4'-DDS | 5.0 | 170 | 400 | 1.15 |
| 18 | 0:1 | 4,4'-DDS | 10.0 | 170 | 630 | 1.30 |

### Examples 19 to 21 and Comparative Examples 22 and 23

Example 19 in accordance with the present invention was bisphenol Z resin (Bis-Z) cured with 9,9'-bis(3-chloro-4-aminophenyl)fluorene(CAF). Example 20 in accordance with the present invention also included bisphenol F resin (MX136), while example 21 also included bisphenol A resin (MY721). Comparative examples 22 and 23 were bisphenol A (LY1556 supplied by Huntsman) and bisphenol F (GY285 as supplied by Huntsman) resins cured with silicone elastomer.

The results are shown in Table 4 below.

**Table 4. Tg properties of epoxy resins cured with CAF.**

| **Component** | Example 19 | Example 20 | Example 21 | Comparative Example 22 | Comparative Example 23 |
|---|---|---|---|---|---|
| Bis-Z | 63.70 g | 54.00 g | 25.00 g | - | - |
| MY721 | - | - | 7.50 g | 12.70 g | - |
| MY816 | - | - | - | - | 13.13 g |
| MX136 | - | 10.00 g | 30.00 g | 40.00 g | - |
| GY285 | - | - | - | 8.10 g | 37.91 g |
| CAF | 36.30 g | 36.00 g | 37.50 g | 39.20 g | 37.57 g |
| | | | | | |
| **Dry Tg (°C)** | 192 | 187 | 188 | 182 | 177 |
| | | | | | |
| **Wet Tg (°C)** | 183 | 178 | 174 | 170 | 161 |

Greater values of Tg were recorded when bisphenol Z resin was cured with CAF and the highest Tg when no bisphenol A or F was present.

Overall, the highest dry Tg was observed for bisphenol Z resin when cured with 4,4'-DDS (Comparative Example 4) and the highest wet Tg when cured with CAF (Example 19). The lowest water uptake was seen when bisphenol Z resin was cured with M-DEA (Comparative Example 6). The best toughening results were obtained with a 7:2 ratio of bisphenol Z:bisphenol F resin (Comparative Example 15).

## Claims

1. A resin composition for producing a composite, wherein the composition comprises:
(a) a first resin component comprising an acid catalyzed reaction product of phenol with cyclohexanone which is a bisphenol Z based epoxy resin or derivative thereof comprising at least one glycidyl group; and
(b) at least one curing agent;
wherein the curing agent comprises 9,9'-bis(3-chloro-4-aminophenyl)fluorene (CAF).

2. The composition according to claim 1, wherein the first resin component comprises a bisphenol Z diglycidyl ether having the following formula:

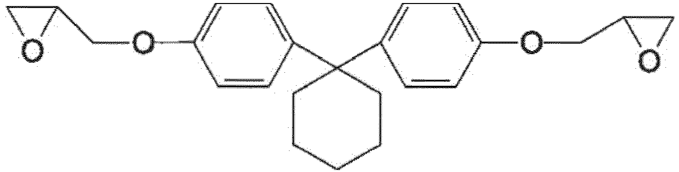

3. The composition of claim 2, wherein one or more of the hydrogens attached to the carbons of the cyclohexyl group are replaced by one or more substituents R₁ and/or R₂, R₁ and/or R₂ being selected from n-alkyls, preferably methyl, ethyl, propyl, butyl or hexyl groups; or aromatic, aliphatic or halogen or phosphorus or sulphur substituents.

4. The composition according to any preceding claim, wherein the composition comprises an additional resin component selected from an epoxy resin, an bismaleimide resin, cyanate ester resin, benzoxazine resin , a phenolic resin or a combination thereof; preferably, wherein the additional resin component comprises a bisphenol A epoxy resin or a bisphenol F epoxy resin or a combination thereof.

5. The composition according to claim 4, wherein the ratio of the amount of first resin component to the amount of the additional resin component is from 8:1 to 2:1, preferably from 4:1 to 3:1.

6. The composition according to any preceding claim, further comprising at least one further thermosetting resin; preferably wherein the further thermoset resin is selected from cyanate ester resins, vinyl ester resins, benzoxazine resins, bismaleimide resins, vinyl ester resins, phenolic resins, polyester resins, unsaturated polyester resins, cyanate ester resins, tetraglycidyl derivatives of 4,4'-diaminodiphenylmethane (TGDDM), triglycidyl derivatives of aminophenols (TGAP), epoxy novolacs and derivatives thereof, or a combination thereof.

7. The composition according to any preceding claim, wherein the amount of the first resin component present in the composition is in the range of 5 wt% to 90 wt%, preferably from 8 wt% to 80 wt%, and/or wherein the amount of the curing agent present in the composition is in the range of 2 wt% to 50 wt%.

8. The composition according to any preceding claim further comprising at least one additional ingredient selected from flexibilisers, toughening agents/particles, accelerators, core shell rubbers, flame retardants, wetting agents, pigments/dyes, flame retardants, plasticisers, UV absorbers, viscosity modifiers, stabilisers, inhibitors, or any combination thereof.

9. The composition according to any preceding claim, wherein the composition further comprises coreshell rubber particles (CSP) dispersed in bisphenol resin, preferably wherein the amount of the core rubber particles (CSP) present in the composition is in the range of 2.5 wt% to 7.5 wt%, preferably 3 wt% to 6 wt%, or more preferably from 15 to 8 wt% based on the overall weight of the composition and/or combinations of the aforesaid ranges.

10. The composition according to any preceding claim, wherein the composition has one or more of the following properties when cured at a temperature between 170 and 190°C, preferably at 180°C, for one to three hours, preferably for two hours:
i) compression modulus in the range of 3.0 to 3.8 GPa, preferably 3.3 to 3.5 GPa as measured in accordance with ASTM D790;
ii) wet Tg in the range of 130 to 190°C, preferably 145 to 185°C, more preferably 174 to 185°C as measured in accordance with ASTM D7028;
iii) dry Tg in the range of 150 to 200°C, preferably 180 to 195°C, more preferably 184 to 195°C as measured in accordance with ASTM D7028;
iv) critical strain energy release rate G_{1C} in the range of 150 to 1000 Jm⁻², preferably 450 to 1000 Jm⁻², more preferably 700 to 1000 Jm⁻² as measured in accordance with ASTM D5045;
v) critical stress intensity factor K_{1C} in the range of 0.75 to 2.00 MPa.m^{0.5}, preferably 1.31 to 2.00 MPa.m^{0.5}, more preferably 1.60 to 1.80 as measured in accordance with ASTM D5045.

11. A method of curing the resin composition according to any preceding claim, wherein the method comprises the steps of:
(a) mixing the resin component and the curing agent; and
(b) heating the mixture for a time and at a temperature sufficient to cure the composition, preferably wherein the time is from 1 to 3 hours and the temperature is in the range of 170 to 190°C.

12. A cured composite obtainable by the method according to claim 11.

13. Use of a cured composite according to claim 12 for forming aerospace components.

14. A prepreg comprising fibrous reinforcement and a composition according to any one of claims 1 to 10.

## Patentansprüche

1. Harzzusammensetzung zur Herstellung eines Verbundwerkstoffs, wobei die Zusammensetzung Folgendes umfasst:
(a) eine erste Harzkomponente, die ein Produkt einer säurekatalysierten Reaktion von Phenol mit Cyclohexanon umfasst, bei dem es sich um ein Bisphenol-Z-basiertes Epoxyharz oder ein Derivat davon handelt, das wenigstens eine Glycidylgruppe umfasst; und
(b) wenigstens ein Härtungsmittel;
wobei das Härtungsmittel 9,9'-Bis(3-chlor-4-aminophenyl)fluoren (CAF) umfasst.

2. Zusammensetzung nach Anspruch 1, wobei die erste Harzkomponente einen Bisphenol-Z-Diglycidylether mit der folgenden Formel umfasst:

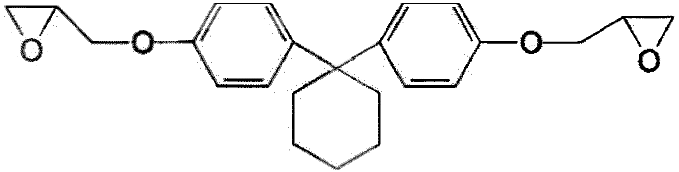

3. Zusammensetzung nach Anspruch 2, wobei ein oder mehrere der Wasserstoffe, die an den Kohlenstoffen der Cyclohexylgruppe gebunden sind, durch einen oder mehrere Substituenten R₁ und/oder R₂ ersetzt sind, wobei R₁ und/oder R₂ aus n-Alkylen, vorzugsweise Methyl-, Ethyl-, Propyl-, Butyl- oder Hexylgruppen oder aromatische, aliphatische oder Halogen- oder Phosphor-oder Schwefelsubstituenten ersetzt sind.

4. Zusammensetzung nach einem der vorhergehenden Ansprüche, wobei die Zusammensetzung eine zusätzliche Harzkomponente umfasst, die aus einem Epoxyharz, einem Bismaleimidharz, Cyanatesterharz, Benzoxazinharz, einem Phenolharz oder einer Kombination davon ausgewählt ist; wobei die zusätzliche Harzkomponente vorzugsweise ein Bisphenol-A-Epoxyharz oder ein Bisphenol-F-Epoxyharz oder eine Kombination davon umfasst.

5. Zusammensetzung nach Anspruch 4, wobei das Verhältnis der Menge der ersten Harzkomponente zur Menge der zusätzlichen Harzkomponente von 8:1 bis 2:1, vorzugsweise von 4:1 bis 3:1 beträgt.

6. Zusammensetzung nach einem der vorhergehenden Ansprüche, die weiterhin wenigstens einen weiteren Duroplasten umfasst; wobei der weitere Duroplast vorzugsweise aus Cyanatesterharzen, Vinylesterharzen, Benzoxazinharzen, Bismaleimidharzen, Vinylesterharzen, Phenolharzen, Polyesterharzen, ungesättigten Polyesterharzen, Cyanatesterharzen, Tetraglycidylderivaten von 4,4'-Diaminodiphenylmethan (TGDDM), Triglycidylderivaten von Aminophenolen (TGAP), Epoxynovolaken und Derivaten davon oder einer Kombination davon ausgewählt ist.

7. Zusammensetzung nach einem der vorhergehenden Ansprüche, wobei die Menge der in der Zusammensetzung vorhandenen ersten Harzkomponente im Bereich von 5 Gew.-% bis 90 Gew.-%, vorzugsweise von 8 Gew.-% bis 80 Gew.-% liegt und/oder wobei die Menge des in der Zusammensetzung vorhandenen Härtungsmittels im Bereich von 2 Gew.-% bis 50 Gew.-% liegt.

8. Zusammensetzung nach einem der vorhergehenden Ansprüche, die weiterhin wenigstens einen zusätzlichen Bestandteil umfasst, der aus Plastifizierungsmitteln, Schlagfestmachern/-partikeln, Beschleunigern, Kern-Schale-Kautschuken, Flammschutzmitteln, Benetzungsmitteln, Pigmenten/Farbstoffen, Flammschutzmitteln, Weichmachern, UV-Absorptionsmitteln, Viskositätsreglern, Stabilisatoren, Inhibitoren oder jeder Kombination davon ausgewählt ist.

9. Zusammensetzung nach einem der vorhergehenden Ansprüche, wobei die Zusammensetzung weiterhin in Bisphenolharz dispergierte Kern-Schale-Kautschukpartikel (CSP) umfasst, wobei die Menge der in der Zusammensetzung vorhandenen Kern-Kautschukpartikel (CSP) im Bereich von 2,5 Gew.-% bis 7,5 Gew.-%, vorzugsweise 3 Gew.-% bis 6 Gew.-% oder noch mehr bevorzugt von 15 bis 8 Gew.-% liegt, bezogen auf das Gesamtgewicht der Zusammensetzung und/oder Kombinationen der oben erwähnten Bereiche.

10. Zusammensetzung nach einem der vorhergehenden Ansprüche, wobei die Zusammensetzung eine oder mehrere der folgenden Eigenschaften hat, wenn sie bei einer Temperatur zwischen 170 und 190 °C, vorzugsweise bei 180 °C, eine bis drei Stunden lang, vorzugsweise zwei Stunden lang gehärtet wird:
i) einen Kompressionsmodul im Bereich von 3,0 bis 3,8 GPa, vorzugsweise 3,3 bis 3,5 GPa, gemessen gemäß ASTM D790;
ii) eine Nass-Tg im Bereich von 130 bis 190 °C, vorzugsweise 145 bis 185 °C, noch mehr bevorzugt 174 bis 185 °C, gemessen gemäß ASTM D7028;
iii)eine Trocken-Tg im Bereich von 150 bis 200 °C, vorzugsweise 180 bis 195 °C, noch mehr bevorzugt 184 bis 195 °C, gemessen gemäß ASTM D7028;
iv) eine kritische Energiefreisetzungsrate G_{IC} im Bereich von 150 bis 1000 Jm⁻², vorzugsweise 450 bis 1000 Jm⁻², noch mehr bevorzugt 700 bis 1000 Jm⁻², gemessen gemäß ASTM D5045;
v) einen kritischen Spannungsintensitätsfaktor K_{IC} im Bereich von 0,75 bis 2,00 MPa.m^{0,5}, vorzugsweise 1,31 bis 2,00 MPa.m^{0,5}, noch mehr bevorzugt 1,60 bis 1,80, gemessen gemäß ASTM D5045.

11. Verfahren zum Härten der Harzzusammensetzung nach einem der vorhergehenden Ansprüche, wobei das Verfahren die folgenden Schritte umfasst:
(a) Mischen der Harzkomponente und des Härtungsmittels und
(b) Erwärmen der Mischung für einen Zeitraum und eine Temperatur, die ausreichend sind, um die Zusammensetzung zu härten, wobei die Zeit vorzugsweise von 1 bis 3 Stunden und die Temperatur vorzugsweise im Bereich von 170 bis 190 °C liegt.

12. Gehärtete Zusammensetzung, die durch das Verfahren nach Anspruch 11 erhältlich ist.

13. Verwendung eines gehärteten Verbundwerkstoffs nach Anspruch 12 zur Bildung von Komponenten für die Luft-und Raumfahrt.

14. Prepreg, der eine Faserverstärkung und eine Zusammensetzung nach einem der Ansprüche 1 bis 10 umfasst.

## Revendications

1. Composition de résine pour la production d'un composite, la composition comprenant :
(a) un premier composant de résine comprenant un produit de réaction catalysée par un acide d'un phénol avec la cyclohexanone qui est une résine époxy à base de bisphénol Z ou un dérivé correspondant comprenant au moins un groupe glycidyle ; et
(b) au moins un agent de durcissement ;
l'agent de durcissement comprenant du 9,9'-bis(3-chloro-4-aminophényl)fluorène (CAF).

2. Composition selon la revendication 1, le premier composant de résine comprenant un diglycidyléther de bisphénol Z possédant la formule suivante :

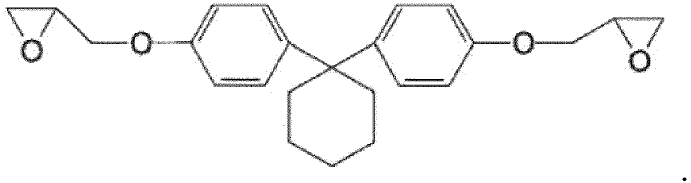

3. Composition selon la revendication 2, un ou plusieurs des hydrogènes fixés aux carbones du groupe cyclohexyle étant remplacés par un ou plusieurs substituants R¹ et/ou R₂, R₁ et/ou R₂ étant choisis parmi des n-alkyles, préférablement des groupes méthyle, éthyle, propyle, butyle ou hexyle ; ou des substituants aromatiques, aliphatiques ou de type halogène ou phosphore ou soufre.

4. Composition selon une quelconque revendication précédente, la composition comprenant un composant de résine supplémentaire choisi parmi une résine époxy, une résine de bismaléidimide, une résine d'ester de cyanate, une résine de benzoxazine, une résine phénolique ou une combinaison correspondante ; préférablement le composant de résine supplémentaire comprenant une résine époxy de bisphénol A ou une résine époxy de bisphénol F ou une combinaison correspondante.

5. Composition selon la revendication 4, le rapport de la quantité de premier composant de résine sur la quantité du composant de résine supplémentaire étant de 8:1 à 2:1, préférablement de 4:1 à 3:1.

6. Composition selon une quelconque revendication précédente, comprenant en outre au moins une résine thermodurcissable supplémentaire ; préférablement la résine thermodurcissable supplémentaire étant choisie parmi des résines d'ester de cyanate, des résines d'ester de vinyle, des résines de benzoxazine, des résines de bismaléidimide, des résines d'ester de vinyle, des résines phénoliques, des résines de polyester, des résines de polyester insaturé, des résines d'ester de cyanate, des dérivés de tétraglycidyle du 4,4'-diaminodiphénylméthane (TGDDM), des dérivés de triglycidyle d'aminophénols (TGAP), des novolacs époxy et des dérivés correspondants, et une combinaison correspondante.

7. Composition selon une quelconque revendication précédente, la quantité du premier composant de résine présent dans la composition se situant dans la plage de 5 % en poids à 90 % en poids, préférablement de 8 % en poids à 80 % en poids, et/ou la quantité de l'agent de durcissement présent dans la composition se situant dans la plage de 2 % en poids à 50 % en poids.

8. Composition selon une quelconque revendication précédente, comprenant en outre au moins un ingrédient supplémentaire choisi parmi des agents flexibilisants, des agents/particules de ténacité, des accélérateurs, des caoutchoucs de type noyau-enveloppe, des retardateurs de flamme, des agents mouillants, des pigments/colorants, des retardateurs de flamme, des plastifiants, des absorbants UV, des modificateurs de viscosité, des stabilisants, des inhibiteurs, ou une quelconque combinaison correspondante.

9. Composition selon une quelconque revendication précédente, la composition comprenant en outre des particules de caoutchouc de type noyau-enveloppe (CSP) dispersées dans une résine de bisphénol, préférablement la quantité de particules de caoutchouc de noyau (CSP) présentes dans la composition se situant dans la plage de 2,5 % en poids à 7,5 % en poids, préférablement de 3 % en poids à 6 % en poids, ou plus préférablement de 15 à 8 % en poids sur la base du poids total de la composition et/ou des combinaisons des plages mentionnées précédemment.

10. Composition selon une quelconque revendication précédente, la composition possédant une ou plusieurs des propriétés suivantes lorsqu'elle est durcie à une température comprise entre 170 et 190 °C, préférablement à 180 °C, pendant une à trois heures, préférablement pendant deux heures :
i) un module de compression dans la plage de 3,0 à 3,8 GPa, préférablement de 3,3 à 3,5 GPa tel que mesuré conformément à la norme ASTM D790 ;
ii) lorsqu'elle est humide, une Tg dans la plage de 130 à 190 °C, préférablement de 145 à 185 °C, plus préférablement de 174 à 185 °C telle que mesurée conformément à la norme ASTM D7028 ;
iii) lorsqu'elle est sèche, une Tg dans la plage de 150 à 200 °C, préférablement de 180 à 195 °C, plus préférablement de 184 à 195 °C telle que mesurée conformément à la norme ASTM D7028 ;
iv) un taux critique de libération d'énergie de déformation G_{1C} dans la plage de 150 à 1 000 Jm⁻², préférablement de 450 à 1 000 Jm⁻², plus préférablement de 700 à 1 000 Jm⁻² tel que mesuré conformément à la norme ASTM D5045 ;
v) un facteur critique d'intensité sous contrainte K_{1C} dans la plage de 0,75 à 2,00 MPa.m^{0,5}, préférablement de 1,31 à 2,00 MPa.m^{0,5}, plus préférablement de 1,60 à 1,80 tel que mesuré conformément à la norme ASTM D5045.

11. Procédé de durcissement de la composition de résine selon une quelconque revendication présente, le procédé comprenant les étapes de :
(a) mélange du composant de résine et de l'agent de durcissement ; et de
(b) chauffage du mélange pendant un temps et à une température suffisants pour durcir la composition, préférablement le temps étant de 1 à 3 heures et la température se situant dans la plage de 170 à 190 °C.

12. Composite durci pouvant être obtenu par le procédé selon la revendication 11.

13. Utilisation d'un composite durci selon la revendication 12 pour la formation de composants aérospatiaux.

14. Préimprégné comprenant un renforcement fibreux et une composition selon l'une quelconque des revendications 1 à 10.
